# EUROPEAN PATENT SPECIFICATION

(11) **EP 4 603 390 B1**
(45) Date of publication and mention of the grant of the patent: **11.11.2026**
(21) Application number: 25186799.0
(22) Date of filing: 23.01.2023
(51) Int. Cl.: B64D 33/10, B64C 1/12, B64C 3/26, B64D 33/02, B64D 15/02

(54) **AIRCRAFT SKIN HEAT EXCHANGER**
FLUGZEUGHAUTWÄRMETAUSCHER
ÉCHANGEUR DE CHALEUR DE LA PEAU D'UN AÉRONEF

(30) Priority: 26.01.2022 US 202217584909
(43) Date of publication of application: 20.08.2025
(62) Document number(s) of the earlier application(s) in accordance with Art. 76 EPC: 23152943.9 / 4 219 315
(73) Proprietor: RTX Corporation, Farmington, CT 06032 (US)
(72) Inventor: SOBANSKI, Jon E., Glastonbury, 06033 (US); HANRAHAN, Paul R., Sedona, 86351 (US)
(74) Representative: Dehns

(56) References cited:
- WO-A1-2021/032476
- GB-A- 2 581 795
- US-A1- 2017 036 775
- US-A1- 2017 167 382
- US-A1- 2018 051 716

## Description

### BACKGROUND

Aircraft propulsion systems use a gas turbine engine that burns carbon based fuels. The aircraft industry desires to significantly reduce carbon emissions produced by aircraft propulsion systems. Engine systems disposed in an aircraft structure provides several benefits to engine operational efficiencies. However, incorporation of propulsion systems in an airframe present challenges to existing engine architectures. Moreover, engine systems in an aircraft structure require ducts to communicate air to a propulsion system and exhaust waste gases and airflow. The size of such ducts are constrained by the aircraft structures and therefore may not provide a desired amount of airflow for cooling.

Although current engine systems have improved propulsive efficiency, aircraft engine manufacturers continue to seek further improvements to engine performance including improvements to thermal, transfer and propulsive efficiencies.

US 2017/167382 A1 discloses a thermal management system. An exemplary surface heat exchange module of the disclosed system includes a plurality of heat exchangers integrated into a surface of a nose cowl of a turbofan engine, a fan cowl of the turbofan engine, at least one inlet guide vane of the turbofan engine, a splitter of the turbofan engine, and a rotatable front hub of the turbofan engine.

US 2018/051716 A1 discloses a thermal management system for an electric propulsion engine.

US 2017/036775 A1 discloses an aircraft heating assembly with a liquid cooled internal combustion engine and a heating element using waste heat.

### SUMMARY

An aircraft heat exchanger system according to the presently claimed invention is provided in accordance with claim 1. Further aspects of the presently claimed invention are provided in accordance with the dependent claims.

In one exemplary embodiment of any of the foregoing, the bottom outer surface is in communication with a boundary layer flow of air.

In a further embodiment of any of the foregoing, the first heat exchanger assembly includes a first outlet that communicates the working flow to an inlet of the skin heat exchanger assembly.

In a further embodiment of any of the foregoing, the skin heat exchanger includes a second outlet that communicates the working flow to the first heat exchanger assembly.

In a further embodiment of any of the foregoing, the skin heat exchanger assembly is black.

In a further embodiment of any of the foregoing, the aircraft propulsion system includes a second heat exchanger assembly that is disposed in the aircraft structure. The second heat exchanger is in fluid communication with the skin heat exchanger assembly.

In a further embodiment of any of the foregoing, the aircraft structure includes at least one of an aircraft fuselage or an aircraft wing.

Although the different examples have the specific components shown in the illustrations, embodiments of this disclosure are not limited to those particular combinations. It is possible to use some of the components or features from one of the examples in combination with features or components from another one of the example, insofar as the combination falls within the scope defined by the appended claims.

These and other features disclosed herein can be best understood from the following specification and drawings, the following of which is a brief description.

### BRIEF DESCRIPTION OF THE DRAWINGS

Figure 1 is a schematic view of an example aircraft heat exchanger system.
Figure 2 is a schematic view of a bottom surface of an example aircraft structure including a skin heat exchanger assembly.
Figure 3 is an enlarged view of a portion of an example skin heat exchanger assembly.
Figure 4 is a schematic view of another example aircraft heat exchanger system.
Figure 5 is a schematic view of another example aircraft heat exchanger system.

### DETAILED DESCRIPTION

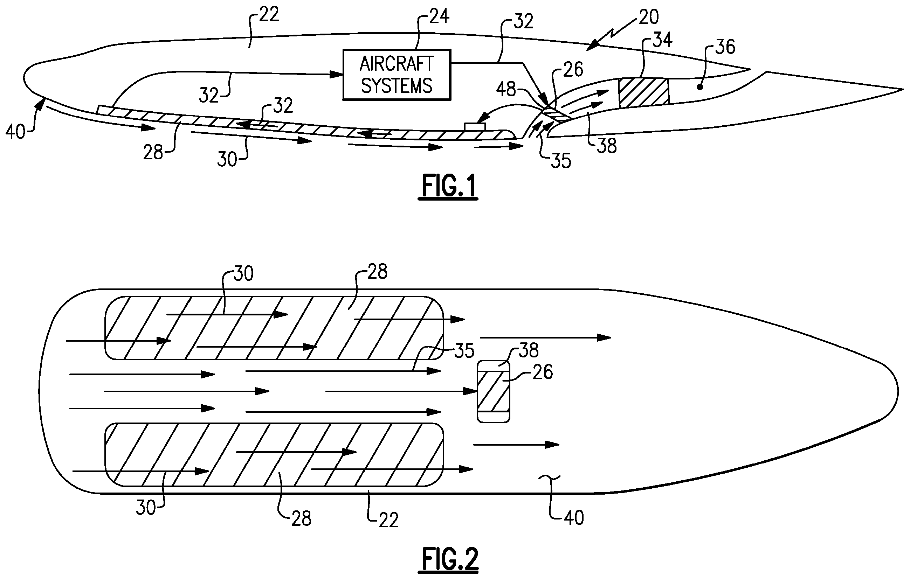

Figure 1 is a schematic view of an example aircraft heat exchanger system 20 disposed in an aircraft structure 22. The aircraft structure 22 may be the aircraft fuselage, a wing or other lifting structure. The disclosed example aircraft structure 22 includes an imbedded propulsor assembly 34 that receives air flow through an inlet duct 38. The propulsor assembly 34 creates a high energy propulsive flow that is exhausted through an exhaust duct 36. In one disclosed example, the propulsor assembly 34 is electrically powered In another disclosed example embodiment, the propulsor assembly 34 is a hybrid system that combines conventional combustion with electric power. It should be understood that although several types of propulsor assemblies are disclosed by way of example that any propulsor assembly would benefit from the heat exchanger system of this disclosure and are within the contemplation of this disclosure.

The inlet duct 38 is sized to provide a desired amount of airflow to the propulsor assembly 34. The size over the inlet duct 38 is constrained by the size and shape of the aircraft structure 22. Accordingly, exposure to inlet airflow is limited by the size of the inlet duct 38. The constrained amount of airflow may limit a thermal capacity of a heat exchanger system required to cool and transfer heat produced by various aircraft systems 24. The aircraft systems 24 are shown schematically and may include lubricant, cooled cooling air, buffer cooling air and any other aircraft systems that transfer thermal energy to operate efficiently. A disclosed example heat exchanger system embodiment provides for increased thermal transfer capacity without modifications to the inlet duct 38.

The example heat exchanger system 20 includes a first heat exchanger assembly 26 that is disposed in the inlet duct 38 and in thermal communication with an airflow 30 such that some airflow portion 35 is ingested into inlet duct 38. A skin heat exchanger assembly 28 is disposed along an outer bottom surface 40 of the aircraft structure 22 and in thermal communication with the airflow 30. The first heat exchanger assembly 26 and the skin heat exchanger assembly 28 are in fluid communication such that a working fluid 32 flows between the first heat exchanger assembly 26 and the skin heat exchanger 28. The working fluid 32 may include lubricant, fuel, hydraulic fluid as well as other flows that require thermal transfer of heat for efficient operation.

In one disclosed example, a working fluid 32 is communicated first through the first heat exchanger assembly 26. The first heat exchanger assembly 26 transfers some quantity of thermal energy into the ingest airflow 35. The amount of thermal energy transferred may be sufficient to provide efficient operation. However, should additional thermal energy transfer be required, the working fluid 32 may be communicated to the skin heat exchanger assembly 26. In one disclosed example, the first heat exchanger 26 provides between 80% and 100% of the required thermal transfer capacity desired to sufficiently cool the working fluid 32 and the skin heat exchanger assembly provides the remaining thermal transfer capacity. In another disclosed embodiment, the first heat exchanger 26 provides between 85% and 90% of the required thermal transfer capacity and the skin heat exchanger assembly provides the remaining 15% to 10%. As appreciated, other combinations of heat transfer capacity may be utilized and are within the contemplation of this disclosure.

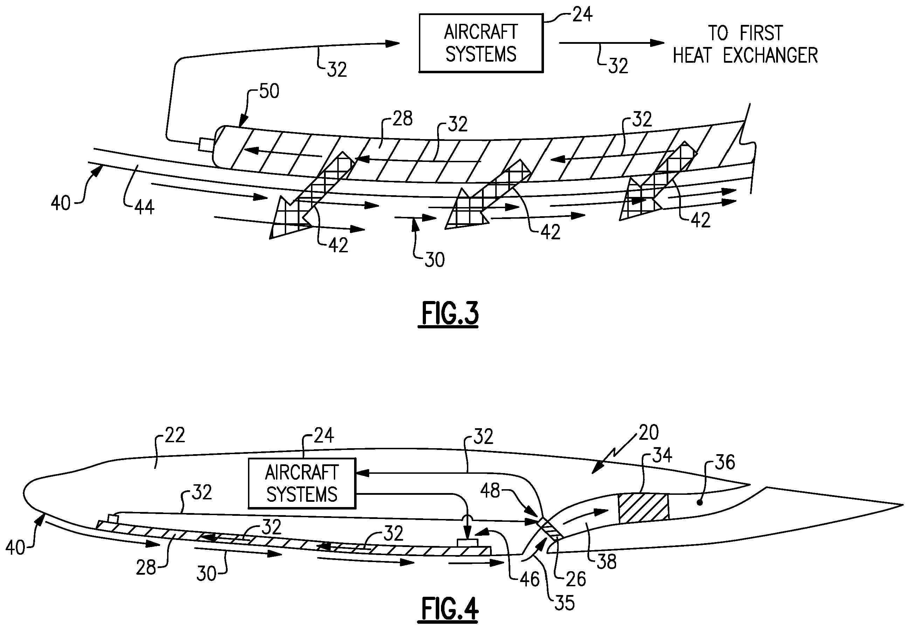

Referring to Figures 2 and 3 with continued reference to Figure 1, the example heat transfer system 20 includes the skin heat exchanger 28 disposed on a bottom surface of the aircraft structure 22. The skin heat exchanger 28 may have any shape, width and length that provides a desired thermal transfer capacity. The bottom surface 40 is typically not exposed to sunlight for extended periods of time and therefore is where the example skin heat exchanger 28 is mounted.

In this disclosed example, the skin heat exchanger 28 is disposed on either side of the inlet 38. The offset placement of the skin heat exchanger 28 provides for non-heated boundary layer airflow 35 to be communicated into the inlet 38. Accordingly, airflow that has accepted heat through contact with the skin heat exchanger 28 is not substantially communicated into the inlet 38. The inlet 38 and thereby the first heat exchanger 26 is not provided with preheated air. It should be appreciated that it is within the contemplation and scope of this disclosure, as defined by the scope of the appended claims, that the skin heat exchanger 28 may be located in other portions of the aircraft structure 22 that do not result in preheated air being communicated into the inlet 38.

Moreover, the thermal transfer of heat through the skin 44 provided by the disclosed skin heat exchanger 28 may be utilized to provide additional functions that make use of the communicated thermal energy. In one disclosed example, the skin heat exchanger 28 may provide anti-icing functions to prevent ice build up on portions of the aircraft structure 22. The skin heat exchanger 28 may be located, partially, on a leading edge of a wing or other lift generating structure of the aircraft structure 22 to provide an anti-icing function. Moreover, other beneficial uses of the thermal energy transferred through the skin 44 may be utilized by providing a specific location of the skin heat exchanger 28 and are within the scope and contemplation of this disclosure, insofar as such uses fall within the scope defined by the appended claims.

The skin heat exchanger 28 is placed in direct thermal transfer contact with a skin 44 of the aircraft structure 22. The direct contact with the skin 44 provides for thermal contact with the boundary layer flow 30 generated during aircraft operation. The working fluid 32 is flowed through the skin heat exchanger 28 in a forward direction that opposes the boundary layer flow 30. Stated another way, the working fluid 32 is flowed from an aft position toward a forward location that is opposite the flow 30 along the outer skin 44. Thermal energy illustrated by arrows 42 is transferred into the flow 30 and the cooled working fluid 32 is communicated back to the corresponding aircraft system 24.

The skin heat exchanger 28 may be configured with multiple channels and passages for the working fluid 32 that are placed in thermal communication with the skin 44 and thereby the flow 30. It should be appreciated, that the skin heat exchanger 28 may be constructed of any applicable, known, thermal transfer materials and structures and all such materials and configurations are within the contemplation and scope of this disclosure.

The disclosed example skin heat exchanger 28 is black to provide the advantageous thermal absorption properties associated with black body radiation. In this disclosed example, the black body of the skin heat exchanger is schematically indicated at 50.

Moreover, the skin heat exchanger 28 provides the increased thermal transfer capacity without introducing any additional aerodynamic drag. Furthermore, the skin heat exchanger is advantageous for cooling working fluids 32 that operate most efficiently when brought to ambient temperatures due to the large surface areas and high convective cooling rates during aircraft operation.

Referring to Figure 4, the example heat exchange system 20 is shown with the working fluid 32 first being communicated to an inlet 46 of the skin heat exchanger assembly 28. The working fluid 32 is communicated forward and then back to the first heat exchanger assembly 26 disposed in the inlet duct 38. Accordingly, in this disclosed embodiment, the working fluid 32 is initially cooled and then cooled completely by the first heat exchanger assembly 26. The different configurations of working fluid flow 32 are possible to combine the thermal transfer capacities of the first heat exchanger assembly 26 and the skin heat exchanger assembly 28. As appreciated, other routing and communication of the working fluid between the first heat exchanger assembly 26 and the skin heat exchanger assembly 28 are possible and within the scope and contemplation of this disclosure.

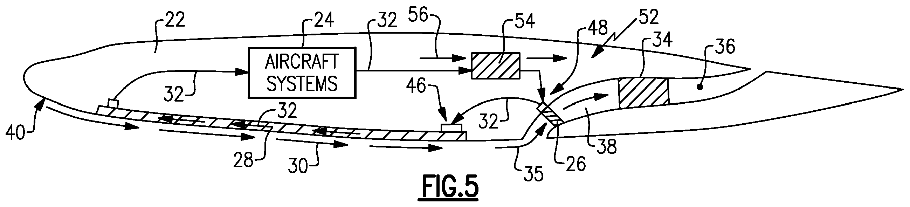

Referring to Figure 5, another heat exchanger system 52 is schematically shown and includes a second heat exchanger 54. The second heat exchanger 54 is in thermal communication with another cooling flow 56 and with the working fluid 32. The second heat exchanger assembly 54 may include a single heat exchanger or multiple heat exchangers that are utilized to further transfer thermal energy. In this disclosed example, the working fluid 32 is communicated from the aircraft systems 24 to the second heat exchanger 54 where it is cooled by the cooling flow 56. The working fluid 32 is then communicated to an inlet 48 of the first heat exchanger 26 for additional transfer of thermal energy. The working fluid 32 is then routed to inlet 46 for further thermal transfer by the skin heat exchanger 28. As appreciated, routing of the working fluid 32 may be controlled by various valves and conduits to select some combination of the heat exchangers required to transfer thermal energy as desired.

Accordingly, the disclosed example heat exchanger systems provide for increased thermal efficiencies within the size constraint arising from alternate propulsor mounting and limited inlet duct size. Additionally, disclosed heat exchanger system embodiments provide for use of smaller heat exchangers in engine inlet ducts while the skin heat exchanger assembly 28 does not increase drag and thereby further provides for increased engine efficiencies.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An aircraft heat exchanger system (20) comprising:
an aircraft structure (22) comprising a bottom outer surface (40);
an inlet duct assembly (38) open through the bottom outer surface (40) of the aircraft structure (22);
a first heat exchanger assembly (26) disposed in the inlet duct assembly (38), the first heat exchanger assembly (26) in thermal communication with an inlet airflow (35) flowing through the inlet duct assembly (38); and
a skin heat exchanger assembly (28) disposed along, and in thermal communication with, the bottom outer surface (40) of the aircraft structure (22), the skin heat exchanger assembly (28) offset relative to the inlet duct assembly (38) and the first heat exchanger assembly (26), the skin heat exchanger (28) in fluid communication with the first heat exchanger (26) such that a working fluid (32) is communicated therebetween.

2. The heat exchanger system (20) as recited in claim 1, wherein the bottom outer surface (40) is in communication with a boundary layer flow of air.

3. The heat exchanger system (20) as recited in claim 1 or 2, wherein the first heat exchanger assembly (26) includes a first outlet that communicates the working fluid (32) to an inlet of the skin heat exchanger assembly (28).

4. The heat exchanger system (20) as recited in any of claims 1 to 3, wherein the skin heat exchanger (28) includes a second outlet that communicates the working fluid (32) to the first heat exchanger assembly (26).

5. The heat exchanger system (20) as recited in claim 4, wherein the second outlet of the skin heat exchanger assembly (28) is forward of the inlet such that the working fluid flows forward opposite a direction of a boundary layer flow.

6. The heat exchanger system (20) as recited in any preceding claim, wherein the skin heat exchanger assembly (28) is black.

7. The heat exchanger system (52) as recited in any preceding claim, including a second heat exchanger assembly (54) disposed in the aircraft structure (22), the second heat exchanger (54) in fluid communication with the skin heat exchanger assembly (28).

8. The heat exchanger system (52) as recited in claim 7, wherein working fluid (32) is communicated from the second heat exchanger (54) to an inlet of the first heat exchanger assembly (26).

9. The heat exchanger system (52) as recited in claim 7 or 8, wherein the second heat exchanger (54) is configured to communicate with a cooling flow which is different to the inlet airflow flowing through the inlet duct assembly (38).

10. The heat exchanger system (20) as recited in any preceding claim, wherein the aircraft structure (22) comprises at least one of an aircraft fuselage or an aircraft wing.

11. The heat exchanger system (20) as recited in any preceding claim, wherein the skin heat exchanger assembly (28) is disposed forward of the inlet duct assembly (38).

12. The heat exchanger system (20) as recited in any preceding claim, wherein the first heat exchanger assembly (26) and the skin heat exchanger assembly (28) include a combined thermal transfer capacity with the first heat exchanger assembly (26) providing more thermal transfer capacity than the skin heat exchanger assembly (28).

13. The heat exchanger system (20) as recited in claim 12, wherein the first heat exchanger assembly (26) provides more than 80% of the combined thermal transfer capacity.

14. The heat exchanger system (20) as recited in claim 12 or 13, wherein the skin heat exchanger assembly (26) provides less than 20% of the combined thermal transfer capacity.

15. The heat exchanger system (20) as recited in any preceding claim, wherein the skin heat exchanger assembly (26) comprises multiple channels for communication of the working fluid (32).

## Patentansprüche

1. Ein Luftfahrzeug-Wärmetauschersystem (20), umfassend:
eine Luftfahrzeugstruktur (22), die eine untere Außenfläche (40) umfasst;
eine Einlasskanalanordnung (38), die durch die untere Außenfläche (40) der Luftfahrzeugstruktur (22) offen ist;
eine erste Wärmetauscheranordnung (26), die in der Einlasskanalanordnung (38) angeordnet ist, wobei die erste Wärmetauscheranordnung (26) in thermischer Verbindung mit einem Einlassluftstrom (35) steht, der durch die Einlasskanalanordnung (38) fließt; und
eine Hautwärmetauscheranordnung (28), die entlang der unteren Außenfläche (40) der Luftfahrzeugstruktur (22) angeordnet ist und in thermischer Verbindung mit dieser steht, wobei die Hautwärmetauscheranordnung (28) relativ zur Einlasskanalanordnung (38) und zur ersten Wärmetauscheranordnung (26) versetzt ist, wobei der Hautwärmetauscher (28) in Fluidverbindung mit dem ersten Wärmetauscher (26) steht, derart, dass ein Arbeitsfluid (32) zwischen diesen kommuniziert wird.

2. Das Wärmetauschersystem (20) nach Anspruch 1, wobei die untere Außenfläche (40) in Verbindung mit einer Grenzschichtströmung von Luft steht.

3. Das Wärmetauschersystem (20) nach Anspruch 1 oder 2, wobei die erste Wärmetauscheranordnung (26) einen ersten Auslass umfasst, der den Arbeitsfluidstrom (32) zu einem Einlass der Hautwärmetauscheranordnung (28) führt.

4. Das Wärmetauschersystem (20) nach einem der Ansprüche 1 bis 3, wobei der Hautwärmetauscher (28) einen zweiten Auslass umfasst, der den Arbeitsfluidstrom (32) zu der ersten Wärmetauscheranordnung (26) führt.

5. Das Wärmetauschersystem (20) nach Anspruch 4, wobei der zweite Auslass der Hautwärmetauscheranordnung (28) vor dem Einlass angeordnet ist, derart, dass das Arbeitsfluid nach vorne entgegengesetzt zu einer Richtung einer Grenzschichtströmung fließt.

6. Das Wärmetauschersystem (20) nach einem der vorangehenden Ansprüche, wobei die Hautwärmetauscheranordnung (28) schwarz ist.

7. Das Wärmetauschersystem (52) nach einem der vorangehenden Ansprüche, umfassend eine zweite Wärmetauscheranordnung (54), die in der Luftfahrzeugstruktur (22) angeordnet ist, wobei der zweite Wärmetauscher (54) in Fluidverbindung mit der Hautwärmetauscheranordnung (28) steht.

8. Das Wärmetauschersystem (52) nach Anspruch 7, wobei Arbeitsfluid (32) von dem zweiten Wärmetauscher (54) zu einem Einlass der ersten Wärmetauscheranordnung (26) geführt wird.

9. Das Wärmetauschersystem (52) nach Anspruch 7 oder 8, wobei der zweite Wärmetauscher (54) dazu ausgebildet ist, mit einem Kühlluftstrom zu kommunizieren, der sich von dem Einlassluftstrom unterscheidet, der durch die Einlasskanalanordnung (38) fließt.

10. Das Wärmetauschersystem (20) nach einem der vorangehenden Ansprüche, wobei die Luftfahrzeugstruktur (22) mindestens eines von einem Luftfahrzeugrumpf oder einem Luftfahrzeugflügel umfasst.

11. Das Wärmetauschersystem (20) nach einem der vorangehenden Ansprüche, wobei die Hautwärmetauscheranordnung (28) vor der Einlasskanalanordnung (38) angeordnet ist.

12. Das Wärmetauschersystem (20) nach einem der vorangehenden Ansprüche, wobei die erste Wärmetauscheranordnung (26) und die Hautwärmetauscheranordnung (28) eine kombinierte thermische Übertragungskapazität umfassen, wobei die erste Wärmetauscheranordnung (26) mehr thermische Übertragungskapazität bereitstellt als die Hautwärmetauscheranordnung (28).

13. Das Wärmetauschersystem (20) nach Anspruch 12, wobei die erste Wärmetauscheranordnung (26) mehr als 80 % der kombinierten thermischen Übertragungskapazität bereitstellt.

14. Das Wärmetauschersystem (20) nach Anspruch 12 oder 13, wobei die Hautwärmetauscheranordnung (26) weniger als 20 % der kombinierten thermischen Übertragungskapazität bereitstellt.

15. Das Wärmetauschersystem (20) nach einem der vorangehenden Ansprüche, wobei die Hautwärmetauscheranordnung (26) mehrere Kanäle zur Kommunikation des Arbeitsfluids (32) umfasst.

## Revendications

1. Système d'échangeur de chaleur d'aéronef (20) comprenant :
une structure d'aéronef (22) comprenant une surface extérieure inférieure (40) ;
un ensemble de conduit d'entrée (38) ouvert à travers la surface extérieure inférieure (40) de la structure d'aéronef (22) ;
un premier ensemble d'échangeur de chaleur (26) disposé dans l'ensemble de conduit d'entrée (38), le premier ensemble d'échangeur de chaleur (26) étant en communication thermique avec un flux d'air d'entrée (35) s'écoulant à travers l'ensemble de conduit d'entrée (38) ; et
un ensemble d'échangeur de chaleur de peau (28) disposé le long de, et en communication thermique avec, la surface extérieure inférieure (40) de la structure d'aéronef (22), l'ensemble d'échangeur de chaleur de peau (28) étant décalé par rapport à l'ensemble de conduit d'entrée (38) et au premier ensemble d'échangeur de chaleur (26), l'échangeur de chaleur de peau (28) étant en communication fluidique avec le premier échangeur de chaleur (26) de sorte qu'un fluide de travail (32) est communiqué entre eux.

2. Le système d'échangeur de chaleur (20) selon la revendication 1, dans lequel la surface extérieure inférieure (40) est en communication avec un flux d'air de couche limite.

3. Le système d'échangeur de chaleur (20) selon la revendication 1 ou 2, dans lequel le premier ensemble d'échangeur de chaleur (26) comprend une première sortie qui communique le fluide de travail (32) à une entrée de l'ensemble d'échangeur de chaleur de peau (28).

4. Le système d'échangeur de chaleur (20) selon l'une quelconque des revendications 1 à 3, dans lequel l'échangeur de chaleur de peau (28) comprend une seconde sortie qui communique le fluide de travail (32) au premier ensemble d'échangeur de chaleur (26).

5. Le système d'échangeur de chaleur (20) selon la revendication 4, dans lequel la seconde sortie de l'ensemble d'échangeur de chaleur de peau (28) est en avant de l'entrée de sorte que le fluide de travail s'écoule vers l'avant à l'opposé d'une direction d'un flux de couche limite.

6. Le système d'échangeur de chaleur (20) selon l'une quelconque des revendications précédentes, dans lequel l'ensemble d'échangeur de chaleur de peau (28) est noir.

7. Le système d'échangeur de chaleur (52) selon l'une quelconque des revendications précédentes, comprenant un second ensemble d'échangeur de chaleur (54) disposé dans la structure d'aéronef (22), le second échangeur de chaleur (54) étant en communication fluidique avec l'ensemble d'échangeur de chaleur de peau (28).

8. Le système d'échangeur de chaleur (52) selon la revendication 7, dans lequel le fluide de travail (32) est communiqué du second échangeur de chaleur (54) à une entrée du premier ensemble d'échangeur de chaleur (26).

9. Le système d'échangeur de chaleur (52) selon la revendication 7 ou 8, dans lequel le second échangeur de chaleur (54) est configuré pour communiquer avec un flux de refroidissement qui est différent du flux d'air d'entrée s'écoulant à travers l'ensemble de conduit d'entrée (38).

10. Le système d'échangeur de chaleur (20) selon l'une quelconque des revendications précédentes, dans lequel la structure d'aéronef (22) comprend au moins l'un parmi un fuselage d'aéronef ou une aile d'aéronef.

11. Le système d'échangeur de chaleur (20) selon l'une quelconque des revendications précédentes, dans lequel l'ensemble d'échangeur de chaleur de peau (28) est disposé en avant de l'ensemble de conduit d'entrée (38).

12. Le système d'échangeur de chaleur (20) selon l'une quelconque des revendications précédentes, dans lequel le premier ensemble d'échangeur de chaleur (26) et l'ensemble d'échangeur de chaleur de peau (28) comprennent une capacité de transfert thermique combinée, le premier ensemble d'échangeur de chaleur (26) fournissant plus de capacité de transfert thermique que l'ensemble d'échangeur de chaleur de peau (28).

13. Le système d'échangeur de chaleur (20) selon la revendication 12, dans lequel le premier ensemble d'échangeur de chaleur (26) fournit plus de 80 % de la capacité de transfert thermique combinée.

14. Le système d'échangeur de chaleur (20) selon la revendication 12 ou 13, dans lequel l'ensemble d'échangeur de chaleur de peau (26) fournit moins de 20 % de la capacité de transfert thermique combinée.

15. Le système d'échangeur de chaleur (20) selon l'une quelconque des revendications précédentes, dans lequel l'ensemble d'échangeur de chaleur de peau (26) comprend de multiples canaux pour la communication du fluide de travail (32).
